# EUROPÄISCHE PATENTSCHRIFT

(11) **EP 4 599 577 B1**
(45) Veröffentlichungstag und Bekanntmachung des Hinweises auf die Patenterteilung: **12.11.2025**
(21) Anmeldenummer: 24782836.1
(22) Anmeldetag: 26.09.2024
(51) Int. Cl.: H04L 67/12, G08G 1/01, B60W 60/00, G08G 1/0967, B60W 50/14, B60W 50/16

(54) **KOMMUNIKATIONSVERFAHREN**
COMMUNICATION METHOD
PROCÉDÉ DE COMMUNICATION

(30) Priorität: 28.10.2023 DE 102023004361
(43) Veröffentlichungstag der Anmeldung: 13.08.2025
(73) Patentinhaber: Mercedes-Benz Group AG, 70372 Stuttgart (DE)
(72) Erfinder: HOIS, Joana, 71034 Böblingen (DE); HANUSCHKIN, Alexander, 76133 Karlsruhe (DE); STUDER, Stefan, 70565 Stuttgart (DE); EHRET, Felix, 79364 Malterdingen (DE)
(74) Vertreter: Novagraaf Group
(86) Internationale Anmeldenummer: PCT/EP2024/077183
(87) Internationale Veröffentlichungsnummer: WO 2025/087648

(56) Entgegenhaltungen:
- DE-A1- 102004 017 602
- DE-A1- 102017 113 005
- DE-A1- 102018 211 008
- DE-A1- 102022 106 028

## Beschreibung

Die Erfindung betrifft ein Kommunikationsverfahren nach der im Oberbegriff von Anspruch 1 näher definierten Art.

Mit zunehmender Digitalisierung nimmt auch der Anteil von Computersystemen in Fahrzeugen zu. Dabei werden die Fahrzeuge auch zunehmend vernetzt, was das Austauschen von Informationen sowohl zwischen Fahrzeugen, als auch zwischen Fahrzeugen und Infrastruktureinheiten ermöglicht. Eine Schnittstelle zum Datenaustausch zwischen Fahrzeugen wird auch als Fahrzeug-zu-Fahrzeug Schnittstelle (V2V) für Vehicle-To-Vehicle, bezeichnet. Eine Kommunikationsschnittstelle zum Datenaustausch mit sonstigen Entitäten wird auch als Fahrzeug-zu-Alles-Schnittstelle, V2X für Vehicle-To-Everything, bezeichnet.

Die Datenübertragung und Absicherung einer V2X-Kommunikation ist hinreichend aus dem Stand der Technik bekannt, siehe beispielsweise: Kiela et al. (2020) "Review of V2X-loT Standards and Frameworks for ITS Applications" https://www.mdpi.com/2076-3417/10/12/4314 sowie Yoshizawa et al. (2023) "A Survey of Security and Privacy Issues in V2X Communication Systems" https://www.researchgate.net/publication/362756333_A_Survey_of_Security_and_Privacy _Issues_in_V2X_Communication_Systems.

Das Absichern einer solchen Fahrzeug-zu-Fahrzeug bzw. Fahrzeug-zu-X Kommunikation basierend auf asymmetrischen kryptografischen Verschlüsselungstechniken ist beispielsweise auch aus der EP 4 106 371 A1 bekannt. Die Druckschrift beschreibt einen Server als Vermittler für in einem asymmetrischen Verschlüsselungsverfahren benutzbare Schlüssel. Durch eine verkettete Mehrfachberechnung von Hashwerten kann überprüft werden, ob eine Vorrichtung zur Teilnahme am in der Druckschrift offenbarten Kommunikationsverfahren autorisiert ist. Ein solcher Verifikationstest wird auch als Runtime-Integrity-Measurement bezeichnet.

Die DE 10 2021 201 910 A1 offenbart ein Verfahren zur inhaltlichen Absicherung von Daten zur kollektiven Perzeption und Ausführung durch eine elektronische Steuervorrichtung eines ersten Verkehrsteilnehmers. Das Verfahren umfasst die Schritte des Erfassens von mittels Fahrzeug-zu-X Kommunikation empfangener Objektdaten und der Prüfung einer Plausibilität eines Zustands des durch die empfangenen Objektdaten beschriebenen Objekts.

Ferner offenbart die DE 10 2017 113 005 A1 eine Vertrauensgestützte Car-to-Car-Kommunikation. Ein erstes Fahrzeug übermittelt dabei eine in Abhängigkeit von Sensordaten erzeugte Nachricht an ein zweites Fahrzeug, welches sein Steuerungsverhalten automatisch in Abhängigkeit des Inhalts der Nachricht anpasst oder eine Warnnachricht ausgibt. Zuerst wird dabei die Vertrauenswürdigkeit des ersten Fahrzeugs überprüft, sodass eine entsprechende Reaktion nur dann ausgeführt wird, wenn das erste Fahrzeug als vertrauenswürdig bewertet wird. Solche Mittel sind zudem auch aus der DE 10 2022 106 028 A1 bekannt.

Ferner offenbart die DE 10 2018 211 008 A1 eine Fahrzeug-zu-X Kommunikationsvorrichtung. Die Kommunikationsvorrichtung ist dazu eingerichtet, eine Information zur Identifizierung eines Herstellers eines die Kommunikationsvorrichtung umfassenden Fahrzeugs auszusenden und in Abhängigkeit einer entsprechenden von einem Fremdfahrzeug empfangenen Herstellerinformation eine Vertrauenswürdigkeit des Fremdfahrzeugs zu bewerten. Fremdfahrzeuge werden somit herstellerspezifisch in Gruppen geordnet.

Zudem offenbart die DE 10 2004 017 602 A1 ein Verfahren und eine Anordnung für ein Kommunikationsnetz mit direkter Fahrzeug-Fahrzeug Kommunikation. Dabei ermittelt bzw. aktualisiert ein Kommunikationssignale empfangendes Fahrzeug die Vertrauenswürdigkeit eines die Kommunikationssignale sendenden Fahrzeugs und stellt eine darauf basierende Vertrauensinformation für eine weitere Fahrzeug-Fahrzeug Kommunikation bereit.

Der direkte Datenaustausch zwischen am Verkehrsgeschehen teilnehmenden Entitäten wie Fahrzeugen und Infrastruktureinrichtungen erlaubt es gänzlich neue Funktionen bereitzustellen. So können in einem Pulk an Fahrzeugen vorausfahrende Fahrzeuge beispielsweise mit Hilfe einer Umfeldsensorik die Umgebung erfassen und so für das Verkehrsgeschehen relevante statische und/oder dynamische Umgebungsobjekte erkennen. So können beispielsweise Gefahrenstellen wie ein vereister Fahrbahnabschnitt identifiziert werden. Die vorausfahrenden Fahrzeuge können somit als Sensoren für die folgenden Fahrzeuge des Pulks fungieren. Insbesondere lässt sich die direkte Fahrzeugkommunikation für das sogenannte "Platooning" verwenden. Bremst beispielsweise ein vorausfahrendes Fahrzeug des Pulks an Fahrzeugen, so kann ein entsprechender Bremsbefehl an die folgenden Fahrzeuge übermittelt werden, sodass diese besonders schnell ebenfalls ein Bremsmanöver einleiten können. So ist es nicht erst erforderlich, dass die folgenden Fahrzeuge basierend auf der eigenen Sensorik das Abbremsen der vorausfahrenden Fahrzeuge feststellen müssen. Somit kann wertvolle Reaktionszeit eingespart werden, was die Verkehrssicherheit verbessert.

Generell besteht jedoch die Möglichkeit, dass von anderen Entitäten empfangene Informationen fehlerbehaftet oder sogar falsch sein können. Mögliche Ursachen sind beispielsweise eine Kompromittierung durch einen Angreifer, ein technischer Defekt wie der Ausfall eines Sensorsystems, eine eingeschränkte Detektionsfähigkeit, eine fehlerhafte Kalibrierung und dergleichen. Das "Vertrauen" in solche fehlerhaften Daten kann zu unerwünschten Folgereaktionen führen, wie das fehlerhafte Ableiten von Steuerungsbefehlen für das eigene Fahrzeug. Somit ist es wünschenswert Verfahren und Mittel bereitzustellen, die einen angemessenen Umgang mit von fremden Entitäten empfangenen Informationen erlauben.

Der vorliegenden Erfindung liegt somit die Aufgabe zugrunde ein verbessertes Kommunikationsverfahren anzugeben, durch dessen Anwendung die Grundvoraussetzungen hierzu geschaffen werden.

Erfindungsgemäß wird diese Aufgabe durch ein Kommunikationsverfahren mit den Merkmalen des Anspruchs 1 gelöst. Vorteilhafte Ausgestaltungen und Weiterbildungen ergeben sich aus den hiervon abhängigen Ansprüchen.

Ein gattungsgemäßes Kommunikationsverfahren, wobei ein Fahrzeug Informationen mittels einer Kommunikationsschnittstelle mit wenigstens einer zum Fahrzeug in Kommunikationsreichweite befindlichen Entität austauscht, wobei die Entität eine Nachricht, umfassend eine Aussage, an das Fahrzeug übermittelt, sieht vor, dass das Fahrzeug, nach Empfangen der Nachricht, selbstständig im Rahmen einer Vertrauensbewertung überprüft, ob die Aussage wahr oder falsch ist, und die Entität als vertrauenswürdig einstuft, wenn die Aussage wahr ist oder die Entität als vertrauensunwürdig einstuft, wenn die Aussage falsch ist, wobei das Fahrzeug der Entität einen Vertrauenskennwert zuordnet, wobei der Vertrauenskennwert bei einer jeweiligen Vertrauensbewertung für eine vertrauensunwürdige Entität reduziert und für eine vertrauenswürdige Entität erhöht wird, wird erfindungsgemäß dadurch weitergebildet, dass
- für eine als vertrauenswürdig eingestufte Entität der Vertrauenskennwert beim Detektieren einer falschen Aussage unverändert bleibt; oder
- für eine als vertrauensunwürdig eingestufte Entität der Vertrauenskennwert beim Detektieren einer wahren Aussage unverändert bleibt;
- wodurch sich Ausreißer bei der Bewertung der Vertrauenswürdigkeit einer Entität ignorieren lassen; wobei
   nach dem Empfangen der Nachricht von der Entität im Rahmen des Ignorierens eines Ausreißers das Fahrzeug als Reaktion eine Hinweisnachricht an die Entität übermittelt; und wobei
   das Fahrzeug, wenn das Fahrzeug selbst eine Hinweisnachricht empfängt:
      - aus einem zumindest teilautomatisierten Betriebsmodus in einen manuellen Betriebsmodus wechselt;
      - eine Datenübertragung über die Kommunikationsschnittstelle einschränkt oder einstellt;
      - eine Datenübertragung über eine Telekommunikationseinheit einschränkt oder einstellt; und/oder
      - eine akustische, visuelle und/oder haptische Warnnachricht an einen Fahrzeuginsassen ausgibt.

Mit Hilfe des erfindungsgemäßen Kommunikationsverfahrens lassen sich somit Fahrzeuge, die über eine Fahrzeug-zu-X Kommunikationstechnik verfügen, besonders sicher betreiben. Bevor von weiteren Entitäten wie im Umfeld des Fahrzeugs anwesenden weiteren Fahrzeugen oder auch statischen Infrastrukturobjekten empfangene Informationen zum Anpassen einer vom Fahrzeug bereitgestellten Funktion genutzt werden, überprüft das Fahrzeug, ob die jeweilige Entität vertrauenswürdig ist. Ist dies der Fall, so können die entsprechenden Informationen gefahrlos im eigenen Fahrzeug weiterverarbeitet werden. Ist die Entität hingegen nicht vertrauenswürdig, so sind gesonderte Maßnahmen zu treffen.

Als Kommunikationsschnittstelle kommen alle zur Ausbildung von Fahrzeug-zu-Fahrzeug bzw. Fahrzeug-zu-X Kommunikationsschnittstellen geeignete
Kommunikationstechnologien infrage. Insbesondere handelt es sich um eine funkbasierte Kommunikation.

Die von der Entität gemachte Aussage kann nur eine geringe Aussagekraft aufweisen oder sogar fehlerhaft sein. Beispielsweise kann die Entität eine Verschmutzung oder Beschädigung einer Fahrbahnoberfläche feststellen oder eine Fahrbahnunebenheit feststellen. Diese Information kann dann als Warnung an das Fahrzeug übermittelt werden, wobei das Fahrzeug diese Information zum Anpassen des eigenen Fahrverhaltens und/oder Ausgeben einer Warnung an eine fahrzeugführende Person nutzen oder eben nicht nutzen kann. Die Sensorik der Entität kann jedoch beeinträchtigt sein, sodass tatsächlich jedoch gar keine Verschmutzung bzw. Beschädigung der Fahrbahn vorliegt. Das Anpassen des Fahrverhaltens des eigenen Fahrzeugs bzw. Ausgeben der Warnung wäre dann kontraproduktiv. Solche Situationen lassen sich durch Anwendung des erfindungsgemäßen Kommunikationsverfahrens vermeiden. So werden Entitäten identifiziert, die Falschaussagen machen, sodass von solchen Entitäten ausgegebene Nachrichten keine Beachtung geschenkt werden kann.

Wie oben beschrieben, ordnet das Fahrzeug der Entität einen Vertrauenskennwert zu, wobei der Vertrauenskennwert bei einer jeweiligen Vertrauensbewertung für eine vertrauensunwürdige Entität reduziert und für eine vertrauenswürdige Entität erhöht wird. Durch das Bilden des Vertrauenskennwerts ist eine besonders differenzierte Kategorisierung bzw. Einstufung von Entitäten gemäß des Vertrauensgrads möglich. So können verschiedene Abstufungen einer Vertrauenswürdigkeit bzw. Vertrauensunwürdigkeit definiert werden und die Vertrauenswürdigkeit von Entitäten über der Zeit nachverfolgt werden. Dabei können feste Regeln existieren, wie der Vertrauenskennwert bei einer jeweiligen Vertrauensbewertung geändert werden soll. So kann der Vertrauenskennwert in Abhängigkeit eines Aussagentyps unterschiedlich reduziert oder erhöht werden, je nachdem ob die Aussage wahr oder falsch ist. Besonders relevante Aussagen wie Gefahrenhinweise können dann beispielsweise zu einer stärkeren Änderung des Vertrauenskennwerts führen, als weniger verkehrsrelevante Aussagen, wie beispielsweise eine allgemeine Information.

Wie oben beschrieben sieht das Kommunikationsverfahren ferner vor, dass
- für eine als vertrauenswürdig eingestufte Entität der Vertrauenskennwert beim Detektieren einer falschen Aussage unverändert bleibt; oder
- für eine als vertrauensunwürdig eingestufte Entität der Vertrauenskennwert beim Detektieren einer wahren Aussage unverändert bleibt.

Hierdurch lassen sich Ausreißer bei der Bewertung der Vertrauenswürdigkeit einer Entität ignorieren. Dabei kann eine Entität als "vertrauenswürdig" bzw. "vertrauensunwürdig" gelten, wenn der Vertrauenskennwert der Entität einen bestimmten Wert angenommen hat. Beispielsweise können entsprechende Ausreißer ignoriert werden, wenn der Vertrauenskennwert beispielsweise größer ist 0,9 oder kleiner als -0,9. Hierdurch kann das fälschliche Anpassen des Vertrauenskennwerts einer Entität verhindert werden.

Es übermittelt dabei nach dem Empfangen der Nachricht von der Entität das Fahrzeug als Reaktion eine Hinweisnachricht an die Entität. Somit kann das Fahrzeug die Entität auf den Ausreißer in der Vertrauensbewertung hinweisen. Diese Information kann von der Entität nutzbringend weiterverwendet werden. Dies wird anhand von folgendem Beispiel veranschaulicht, bei der das eigene Fahrzeug selbst eine Entität ausbildet.

So sieht das erfindungsgemäße Kommunikationsverfahren ferner vor, dass das Fahrzeug, wenn das Fahrzeug selbst eine Hinweisnachricht empfängt:
- aus einen zumindest teilautomatisierten Betriebsmodus in einen manuellen Betriebsmodus wechselt;
- eine Datenübertragung über die Kommunikationsschnittstelle einschränkt oder einstellt;
- eine Datenübertragung über eine Telekommunikationseinheit einschränkt oder einstellt; und/oder
- eine akustische, visuelle und/oder haptische Warnnachricht an einen Fahrzeuginsassen ausgibt.

Ändert sich die Vertrauenswürdigkeit des Fahrzeugs selbst sprunghaft, so kann dies ein Indiz dafür sein, dass das Fahrzeug bzw. eine Recheneinheit des Fahrzeugs durch einen Angreifer korrumpiert wurde, ein Sensorsystem des Fahrzeugs eine Fehlfunktion aufweist oder dergleichen. Weist beispielsweise eine Umgebungssensorik eine eingeschränkte Erfassungsfähigkeit oder Fehlfunktion auf, so kann vorteilhafterweise das Fahrzeug einen zumindest teilautomatisierten Betriebsmodus beenden und in einen manuellen Betriebsmodus wechseln. So besteht ein hohes Sicherheitsrisiko, sollte, wenn das Fahrzeug zumindest teilautomatisiert gesteuert wird, das entsprechende Sensorsystem nicht richtig funktionieren. Sicherheitshalber wird somit die Kontrolle über das Fahrzeug an eine Person abgegeben.

Die Recheneinheiten des Fahrzeugs können auch im Zuge eines Cyberangriffs korrumpiert worden sein. Sicherheitshalber kann daher die Datenübertragung sowohl über die Kommunikationsschnittstelle, also eine entsprechende V2V bzw. V2X Schnittstelle und/oder ein internetbasierter Datenaustausch über die Telekommunikationseinheit eingeschränkt oder eingestellt werden. Auch könnte die interne Kommunikation der Recheneinheiten im Fahrzeug eingeschränkt werden.

Auch können entsprechende Warnnachrichten an einen Fahrzeuginsassen, beispielsweise die fahrzeugführende Person, ausgegeben werden. Dies kann die fahrzeugführende Person dazu veranlassen einen Termin in einer Werkstatt auszumachen, sodass der Ursache für das sprunghafte Ändern der Vertrauenswürdigkeit des Fahrzeugs auf den Grund gegangen werden kann. So kann beispielsweise eine Fehlerursache eines Sensorsystems aufgefunden werden oder ein Cyberangriff aufgedeckt und anschließend beendet werden. Das Fahrzeug kann als akustische Ausgabemittel beispielsweise Lautsprecher aufweisen. Visuelle Warnnachrichten lassen sich durch Warnleuchten und/oder als eine auf einer Anzeigevorrichtung dargestellte Botschaft veranschaulichen. Beispielsweise kann das Lenkrad des Fahrzeugs oder ein Abschnitt eines Fahrzeugsitzes vibrieren, um einen haptischen Hinweis auszugeben.

Eine vorteilhafte Weiterbildung des erfindungsgemäßen Kommunikationsverfahrens sieht dabei vor, dass das Fahrzeug zur Überprüfung der Aussage zu berücksichtigende Informationen:
- aus von wenigstens einem Sensor des Fahrzeugs generierten Sensordaten ableitet;
- aus dem selbständig erfassten Fahrverhalten einer fahrzeugführenden Person des Fahrzeugs ableitet; und/oder
- über eine mit dem Internet verbundene Telekommunikationseinheit empfängt.

Damit das Fahrzeug die Entität als vertrauensunwürdig oder vertrauenswürdig einstufen kann, muss das Fahrzeug die von der Entität gemachte Aussage überprüfen. Hierzu muss das Fahrzeug entsprechende Informationen erheben, die das Überprüfen der Aussage ermöglichen. Je nachdem, um welche Art von Aussage es sich handelt, können verschiedene Quellen für die zu berücksichtigenden Informationen infrage kommen. In einer Vielzahl an Fällen kann das Fahrzeug entsprechende Informationen mit eigenen Sensoren erheben. Bei den Sensoren kann es sich um Umgebungssensoren, wie eine oder mehrere Kameras, Laserscanner wie ein LiDAR, Ultraschallsensoren und/oder Radarsensoren handeln. Mit Hilfe von Umgebungssensoren lässt sich die Umgebung des Fahrzeugs erfassen und somit statische und/oder dynamische Umgebungsobjekte erkennen. Dies ermöglicht es von der Entität entsprechende Objekte betreffende Informationen selbst zu erheben und diese abzugleichen. Wird also beispielsweise von der Entität ein Hinweis auf einen rutschigen Fahrbahnabschnitt empfangen, so kann das Fahrzeug die Fahrbahn selbst überwachen und die Existenz des rutschigen Fahrbahnabschnitts überprüfen. Insbesondere verknüpft dabei die Entität die jeweilige Aussage mit einer Ortsinformation, beispielsweise in Form von Geokoordinaten. Die Entität und das Fahrzeug können über Positionsbestimmungsmittel wie eine Navigationseinheit verfügen, welche dazu in der Lage ist die jeweilige aktuelle Aufenthaltsposition der Entität bzw. des Fahrzeugs mit Hilfe eines globalen Navigationssatelittensystems, beispielsweise GPS oder Galileo, zu bestimmen. Dies ermöglicht es dem Fahrzeug von der Entität empfangene Aussagen eindeutig örtlich zuzuordnen.

Bei dem wenigstens einen Sensor kann es sich generell auch um einen sonstigen Fahrzeugsensor handeln. Beispielsweise kann es sich um einen Temperatursensor, einen Massenstromsensor, einen Raddrehzahlsensor, einen Helligkeitssensor oder dergleichen handeln. Beispielsweise kann das Überfahren eines rutschigen Fahrbahnabschnitts auch durch eine Analyse der Raddrehzahl bzw. des Reifenschlupfes festgestellt werden. Dabei können auch von Fahrzeuguntersystemen verarbeitete Informationen bzw. Ergebnisse berücksichtigt werden, wie beispielsweise von einem Fahrerassistenzsystem wie einer Antriebsschlupfregelung, einem elektronischen Stabilitätsprogramm, einem Spurhalteassistenten oder dergleichen generierte Informationen.

Zur Verarbeitung entsprechender Informationen, um die Aussage der Entität als wahr oder falsch einzustufen, setzt das Fahrzeug eine Recheneinheit ein. Die Recheneinheit hat Zugriff auf ein computerlesbares Speichermedium, umfassend ein Computerprogrammprodukt, dessen Ausführung durch einen Prozessor der Recheneinheit die Bereitstellung der erfindungsgemäßen Verfahrensschritte erlaubt.

Das Fahrzeug bzw. die Recheneinheit kann auch das Fahrverhalten der fahrzeugführenden Person des Fahrzeugs erfassen und hierdurch Rückschlüsse über den Aussagegehalt der von der Entität bezogenen Nachricht ziehen. Ändert beispielsweise die fahrzeugführende Person ihr Fahrverhalten im Bereich einer Gefahrenstelle, auf die eine Entität hingewiesen hat, so kann die Recheneinheit dies als Indiz dafür deuten, dass tatsächlich auf der Fahrbahn eine entsprechende Gefahrenstelle vorliegt. Somit wird die von der Entität gemachte Aussage als wahr eingestuft. Die Recheneinheit kann eine Änderung des Fahrverhaltens beispielsweise dadurch feststellen, dass die fahrzeugführende Person das Fahrzeug beschleunigt oder abbremst, ein abruptes Lenkmanöver durchführt, eine Warnblinkanlage einschaltet, hupt oder dergleichen.

Auch ist es möglich, dass das Fahrzeug bzw. die Recheneinheit weitere Informationen aus dem Internet abruft, um die Aussage der Entität zu überprüfen. Dabei kann die Recheneinheit beispielsweise eine Internetrecherche initiieren und mittels der Internetrecherche aufgefundene Informationen zum Überprüfen der Aussage heranziehen. Auch können Informationen von einem Dienstleister wie einem Verkehrsdienst oder einem Wetterdienst bezogen werden. Beispielsweise kann von einem Verkehrsdienst eine Information darüber bezogen werden, auf welchem Fahrbahnabschnitt einer jeweiligen Straße eine Gefahrenstelle vorliegt. Die von einem Wetterdienst bezogenen Informationen können beispielsweise Rückschlüsse darüber zulassen, ob solche Witterungsbedingungen vorliegen, die zu einer Verkehrsbeeinträchtigung führen können.

Die Telekommunikationseinheit kann eine Kommunikationsanbindung der Recheneinheit an das Internet, insbesondere unter Nutzung einer Mobilfunkverbindung und/oder bei einem in Reichweite befindlichen Wi-Fi Hotspot auch unter Nutzung eine WLAN-Verbindung, ermöglichen. Insbesondere bildet dabei die Telekommunikationseinheit einen zur Kommunikationsschnittstelle abweichenden Datenübertragungspfad aus.

Entsprechend einer weiteren vorteilhaften Ausgestaltung des erfindungsgemäßen Kommunikationsverfahrens ordnet das Fahrzeug der Entität einen Vertrauenskennwert mit einem Wertebereich von -1 bis 1 zu, wobei -1 für eine vertrauensunwürdige Entität, 0 für eine neutrale Entität und 1 für eine vertrauenswürdige Entität stehtMit einem Wertbereich von -1 bis 1 ist eine mathematisch einfache und leicht nachvollziehbare Kategorisierung der Entitäten möglich.

Eine weitere vorteilhafte Ausgestaltung des erfindungsgemäßen Kommunikationsverfahrens sieht ferner vor, dass das Fahrzeug wenigstens eine Eigenschaft der Entität ermittelt und Entitäten in Abhängigkeit ihrer Eigenschaften in Gruppen klassifiziert. Anhand der Eigenschaften kann ein Entitättyp bestimmt werden, wie beispielsweise ob es sich um ein Fahrzeug oder ein statisches Infrastrukturobjekt handelt. Ebenfalls können Fahrzeuge weiter differenziert werden, in beispielsweise: Pkws, Lkws, Motorräder, E-Scooter, E-Bikes und dergleichen. Auch kann beispielsweise die Sonderausstattung eines Fahrzeugs, das Modell, die Baureihe, Fahrzeugdimensionen, die Motorisierung, der Hersteller und dergleichen als Eigenschaft erhoben und berücksichtigt werden. Beispielsweise können Lkws der Gruppe Lkw zugeordnet werden. Beispielsweise können alle Fahrzeuge eines bestimmten Fahrzeugherstellers einer selben Gruppe zugeordnet werden. Fahrzeug können beispielsweise auch in Sportwagen, SUVs, Transporter oder dergleichen unterteilt werden.

Das Zuordnen der Entitäten zu Gruppen ermöglicht es Gemeinsamkeiten festzustellen, wodurch Muster in der Vertrauenswürdigkeit einzelner Entitäten identifiziert werden können.

Zum Erheben der Eigenschaften der Entitäten kann das Fahrzeug die jeweilige Entität mittels der Umgebungssensorik erfassen. So können beispielsweise für unterschiedliche Fahrzeugkategorien charakteristische Fahrzeugdimensionen ermittelt werden. Durch eine Analyse von Kamerabildern können besonders differenzierte Aussagen gemacht werden. So können unter Anwendung bewährter Bilderkennungsalgorithmen charakteristische Bildmerkmale erkannt werden, wie bestimmte Farben, Kontraste oder dergleichen, was eine besonders differenzierte Klassifizierung der Entitäten erlaubt. Auch kann eine Modellbezeichnung, Typbezeichnung oder der Fahrzeughersteller in Kamerabildern erkannt werden.

Bevorzugt wird für wenigstens eine Gruppe an Entitäten ein Gruppenvertrauenskennwert gebildet, insbesondere unter Bilden eines Mittelwerts der individuellen Vertrauenskennwerte der der Gruppe zugeordneten Entitäten. In Abhängigkeit der Eigenschaften der Entitäten bzw. letztendlich damit in Abhängigkeit welcher Gruppe eine jeweilige Entität zugeordnet wird, kann eine höhere oder niedrigere Vertrauenswürdigkeit vorliegen. Beispielsweise können Baumaschinen häufig verschmutzt oder sogar leicht beschädigt sein, sodass ein hohes Risiko vorliegt, dass eine entsprechende Umgebungssensorik beeinträchtigt sein kann. Baumaschinen können beispielsweise somit öfter Falschaussagen machen. Auch könnten sich die Fahrzeuge eines bestimmten Fahrzeugherstellers aufgrund des Verbauens besonders hochwertiger Komponenten und/oder einer sorgfältig durchgeführten Kalibrierung durch eine besonders hohe Erfassungsgüte auszeichnen, sodass solche Fahrzeuge sich durch eine besonders hohe Anzahl wahrer Aussagen auszeichnen. Das Zuordnen von Entitäten zu entsprechenden Gruppen ermöglicht es vorab eine Aussage über die Vertrauenswürdigkeit der jeweiligen Entitäten machen zu können.

Eine weitere vorteilhafte Ausgestaltung des erfindungsgemäßen Kommunikationsverfahrens sieht ferner vor, dass das Fahrzeug, sobald die Entität über die Kommunikationsschnittstelle eine Kommunikationsverbindung zum Fahrzeug aufgebaut hat, eine Identität der Entität feststellt, die Identität abspeichert, und:
- einer erstmalig mit dem Fahrzeug in Kommunikation stehenden Entität einen initialen neutralen Vertrauenskennwert, insbesondere mit dem Wert 0, zuordnet oder die Entität einer Gruppe zuordnet und der Entität einen für die Gruppe repräsentativen Gruppenvertrauenskennwert zuordnet; oder
- einer erneut mit dem Fahrzeug in Kommunikation stehenden Entität einen für die Entität bereits angelegten Vertrauenskennwert lädt.

Je nach Ausgestaltung der Kommunikationsschnittstelle kann auch das Aufbauen der Kommunikationsverbindung zwischen dem Fahrzeug und der Entität unterschiedlich ablaufen. Beispielsweise kann die Entität Informationen als "Broadcast" an alle in Kommunikationsreichweite befindliche Fahrzeuge versenden. Das Fahrzeug und die Entität können jedoch auch eine bidirektionale Kommunikationsverbindung aufbauen. Ebenfalls existieren verschiedene Möglichkeiten, wie die Identität einer bestimmten Entität ermittelt werden kann. Beispielsweise kann die Entität einen eindeutigen Identifikator wie eine Entitäts-ID, einen Entitäts-Namen oder dergleichen als separate Nachricht oder als Teil der Nachricht versenden. Auch könnte beispielsweise eine eindeutige Netzwerkadresse oder Geräteadresse wie eine Bluetooth-Adresse oder MAC-Adresse der Entität zur Nachverfolgung ihrer Identität berücksichtigt werden. Auch könnte ein äußeres Merkmal wie das Kennzeichen oder eine Fahrzeugidentifikationsnummer als Identität fungieren.

Die Identität einer jeweiligen Entität wird dabei in der Recheneinheit des Fahrzeugs gespeichert. Dies ermöglicht es der Recheneinheit festzustellen wann und mit welchen Entitäten bereits eine Kommunikation stattgefunden hat. Dabei kann der Speicher auch als Ringspeicher ausgeführt sein, sodass nach einer bestimmten Zeit und/oder dem Empfangen einer bestimmten Anzahl an Nachrichten alte Nachrichten aus dem Ringspeicher gelöscht werden.

Ist eine neue Entität dem Fahrzeug nicht bekannt, so kann vorteilhaft diese Entität zuerst ein neutraler Vertrauenskennwert, insbesondere bei einem Intervall des Vertrauenskennwerts zwischen -1 und 1 ein Wert von 0 zugeordnet werden. Nach und nach können von der Entität Nachrichten mit Aussagen empfangen werden, deren Wahrheitsgehalt überprüft wird. Nach und nach verschiebt sich dann der Vertrauenskennwert der Entität in den vertrauenswürdigen oder vertrauensunwürdigen Bereich. Unter Berücksichtigung von Entitätsgruppen und entsprechenden Gruppenvertrauenskennwerten kann auch vorab ein von 0 abweichender Vertrauenskennwert einer neuen Entität zugeordnet werden. Entstammt die Entität beispielsweise einer Gruppe von Fahrzeugen eines Fahrzeugherstellers, die sich durch eine besonders hohe Vertrauenswürdigkeit auszeichnen, so kann initial auch ein vertrauenswürdiger Vertrauenskennwert, wie beispielsweise 0,9, der Entität zugeordnet werden.

Die den einzelnen Entitäten zugeordneten Vertrauenskennwerte werden dann gespeichert und deren Entwicklung über die Zeit nachverfolgt. Je mehr Aussagen von einer Entität empfangen werden und diese bestätigt oder widerlegt werden können, desto genauer kann auch das Vertrauen der Entität bestimmt werden. Dabei kann es auch möglich sein, dass das Fahrzeug einige der Aussagen nicht verifizieren kann, beispielsweise weil eine durch eine Aussage referenzierte Geoposition nicht vom Fahrzeug angefahren wird. In diesem Falle kann eine entsprechende Aussage verworfen werden und der Vertrauenskennwert nicht angepasst werden. Aufgrund beispielsweise einer Degradation der Sensorik der Entität kann sich die tatsächliche Vertrauenswürdigkeit der Entität ebenfalls über die Zeit ändern, was sich so nachvollziehen lässt.

Entsprechend einer weiteren vorteilhaften Ausgestaltung des erfindungsgemäßen Kommunikationsverfahrens übermittelt das Fahrzeug eine Vertrauensklassifikation und/oder Gruppenklassifikation wenigstens einer Entität an eine zentrale Recheneinrichtung, wobei die Recheneinrichtung die von einer Vielzahl an Fahrzeugen empfangenen Vertrauensklassifikationen und/oder Gruppenklassifikationen entitätsspezifisch abgleicht und in einer Datenbank aggregiert, insbesondere regionsspezifisch. Mit anderen Worten können die Fahrzeuge einer Fahrzeugflotte jeweilige Entitäten individuell entsprechend ihrer Vertrauenswürdigkeit klassifizieren und diese Informationen an die zentrale Recheneinrichtung, beispielsweise einen Cloudserver, übermitteln. Somit ist es möglich am Verkehrsgeschehen teilnehmende Entitäten besonders umfangreich zu erfassen und ihre jeweilige Vertrauenswürdigkeit nachzuverfolgen. Dabei kann nicht nur die Vertrauensklassifikation, beispielsweise in Form des Vertrauenskennwerts, sondern auch die Zuordnung einer jeweiligen Entität zu einer jeweiligen Gruppe zentral gespeichert und verwaltet werden. Beispielsweise kann ein statistischer Mittelwert, wie das arithmetische Mittel der jeweiligen Vertrauenskennwerte ein und derselben Entität ermittelt werden und dieser Wert dann in der zentralen Recheneinrichtung gespeichert werden.

Gemäß einer vorteilhaften Ausführungsform des erfindungsgemäßen Kommunikationsverfahrens bestimmt dabei die zentrale Recheneinrichtung für verschiedene Regionen spezifische Werte für die einzelnen entitätsspezifischen Vertrauenskennwerte und/oder ihrer jeweiligen Gruppenklassifikation. Verschiedene Regionen zeichnen sich dabei durch unterschiedliche geografische Gebiete aus. Bei einer Region kann es sich beispielsweise um ein Stadtgebiet, ein Bundesland, ein Land bzw. ein Staatsgebiet oder dergleichen handeln. So können ein und derselben Entität für verschiedene Regionen unterschiedliche Vertrauenskennwerte zugeordnet werden und/oder ein und dieselbe Entität kann in verschiedenen Regionen unterschiedlichen Gruppen zugeordnet werden.

Von der zentralen Recheneinrichtung aggregierte Daten können dabei auch veröffentlicht werden, sodass die Informationen auch von anderen Stellen ausgewertet werden können. So können die Hersteller der jeweiligen Entitäten die Aussagefähigkeit überprüfen und hierdurch ihre jeweiligen Entitäten zielgerichtet weiterentwickeln, mit dem Ziel noch zuverlässiger wahre Aussagen machen zu können.

Eine weitere vorteilhafte Ausgestaltung des erfindungsgemäßen Kommunikationsverfahrens sieht ferner vor, dass das Fahrzeug eine Vertrauensklassifikation und/oder Gruppenklassifikation einer Entität von der Recheneinrichtung empfängt. Somit lassen sich die in der Recheneinrichtung aggregierten Daten nutzbringend einsetzen. Trifft das Fahrzeug erstmalig eine bestimmte Entität an, so kann das Fahrzeug den zentral verwalteten Vertrauenskennwert der jeweiligen Entität abrufen. Dies ermöglicht es dem Fahrzeug bereits beim erstmaligen Antreffen der Entität einen besonders zutreffenden Vertrauenskennwert für die jeweilige Entität zu ermitteln und diesen zu berücksichtigten.

Entsprechend einer weiteren vorteilhaften Ausgestaltung des erfindungsgemäßen Kommunikationsverfahrens wird der Wertebereich des Vertrauenskennwerts in zumindest ein vertrauenswürdiges, ein neutrales und ein vertrauensunwürdiges Intervall unterteilt und Nachrichten von Entitäten blockiert, die dem vertrauensunwürdigen Intervall zugeordnet sind, die Aussagen von Entitäten, die dem neutralen Intervall zugeordnet sind, überprüft, und der Informationsgehalt einer Aussage von Entitäten, die dem vertrauenswürdigen Intervall zugeordnet sind, als Eingangsgröße für eine vom Fahrzeug durchgeführte Folgereaktion berücksichtigt. Dabei kommen generell verschiedene Grenzwerte zum Abgrenzen der einzelnen Intervalle zueinander infrage. Beispielsweise kann das vertrauensunwürdige Intervall von -1 bis -0,2 reichen. Das neutrale Intervall kann beispielsweise von -0,19 bis 0,7 reichen. Das vertrauenswürdige Intervall kann beispielsweise von 0,71 bis 1 reichen.

Durch das Blocken der Nachrichten von als vertrauensunwürdig klassifizierten Entitäten lässt sich die Sicherheit des Fahrzeugs verbessern. So wird eine Beeinflussung des Betriebsverhaltens des Fahrzeugs durch fehlerhafte Aussagen vermieden. Beispielsweise könnte eine vertrauensunwürdige Entität auch durch einen Angreifer korrumpiert sein, sodass durch das Blockieren von dieser Entität ausgesendeter Nachrichten die Cybersicherheit des eigenen Fahrzeugs erhöht werden kann. Beispielsweise können entsprechende Einstellungen einer Firewall des Fahrzeugs angepasst werden, sodass die von dieser Entität empfangenen Nachrichten nicht weiterverarbeitet werden.

Von vertrauenswürdigen Entitäten stammende Nachrichten bzw. die einer in einer Nachricht enthaltenen Aussage zu Grunde liegende Information kann dann vom Fahrzeug direkt zur Ausführung einer Folgereaktion berücksichtigt werden. Somit können Reaktionszeiten verkürzt werden. Beispielsweise kann eine Entität mit einer Aussage auf einen Gefahrenbereich an einer bestimmten Fahrbahnstelle hinweisen. Das eigene Fahrzeug kann als Folgereaktion beispielsweise diese Fahrbahnstelle meiden, eine Warnung an die fahrzeugführende Person ausgeben und/oder das Fahrverhalten automatisch anpassen, beispielsweise durch Reduzieren der Fahrgeschwindigkeit.

Eine weitere vorteilhafte Ausgestaltung des erfindungsgemäßen Kommunikationsverfahrens sieht ferner vor, dass eine Historie an Vertrauensbewertungen einer jeweiligen Entität gespeichert wird, wobei zur Berechnung des aktuellen Vertrauenskennwerts aus den historischen Vertrauensbewertungen, die historischen Vertrauensbewertungen jeweils mit einem Zeitfaktor zwischen 0 und 1 multipliziert werden, wobei der Zeitfaktor den Wert 0 annimmt, wenn die jeweilige Vertrauensbewertung älter ist als ein erstes Alter und der Zeitfaktor den Wert 1 annimmt, wenn die jeweilige Vertrauensbewertung jünger ist als ein zweites Alter. In der Vergangenheit bereits erfolgte Vertrauensbewertungen einer bestimmten Entität lassen sich somit mittels einer Gewichtungsfunktion gewichten. Ältere Vertrauensbewertungen können dabei weniger stark ins Gewicht fallen als kürzlich vorgenommene bzw. durchgeführte Vertrauensbewertungen. So kann sich die Vertrauenswürdigkeit einer Entität über der Zeit ändern, beispielsweise weil die Entität durch einen Cyberangriff korrumpiert wurde, weil ein bestimmtes Sensorsystem ausgefallen ist, aufgrund von Abnutzungsescheinungen eine Detektionsfähigkeit eines entsprechenden Sensorsystems abgenommen hat oder dergleichen. So könnten für ein und dieselbe Entität früher höhere Werte für den Vertrauenskennwert ermittelt worden sei, während aktuell eher niedrige Vertrauenskennwerte bestimmt werden. Mit Hilfe des Zeitfaktors kann diesem Sachverhalt Rechnung getragen werden, sodass zum aktuellen Zeitpunkt mit höherer Wahrscheinlichkeit ein der tatsächlichen Vertrauenswürdigkeit entsprechender Vertrauenskennwert ermittelt wird.

Es kommen verschiedene Möglichkeiten infrage, wie der Zeitfaktor zwischen den Werten 0 und 1 verlaufen kann. Beispielsweise kann ein linearer Zusammenhang zwischen der Höhe des Zeitfaktors und dem Alter bestehen. Es könnte sich jedoch auch um einen progressiven oder degressiven Zusammenhang, beispielsweise in Form einer Wurzelfunktion, Logarithmusfunktion, Potenzfunktion oder dergleichen handeln.

Es kommen verschiedene Zeitdauern bzw. Zeitpunkte für das erste und zweite Alter infrage. Beispielsweise können alle Vertrauensbewertungen mit dem Zeitfaktor 1 gewichtet werden, die nicht älter als beispielsweise ein Tag, eine Woche, einige wenige Stunden oder auch Bruchteile oder Vielfache hiervon sind. Beispielsweise können alle Vertrauensbewertungen mit 0 gewichtet werden, die älter als beispielsweise ein Monat, ein Jahr oder auch Bruchteile oder Vielfache hiervon sind.

Durch die Anwendung des erfindungsgemäßen Kommunikationsverfahrens lässt sich somit die Sicherheit bei der Datenübertragung in der V2X-Kommunikation steigern. Auch kann die Qualität entsprechend übermittelbarer Nachrichten verbessert werden, da Fehlerursachen schneller aufgefunden und behoben werden können. Zudem lassen sich Cyberangriffe schneller erkennen und damit beenden.

Weitere vorteilhafte Ausgestaltungen des erfindungsgemäßen Kommunikationsverfahrens ergeben sich auch aus dem Ausführungsbeispiel, welches nachfolgend unter Bezugnahme auf die Figur näher beschrieben wird.

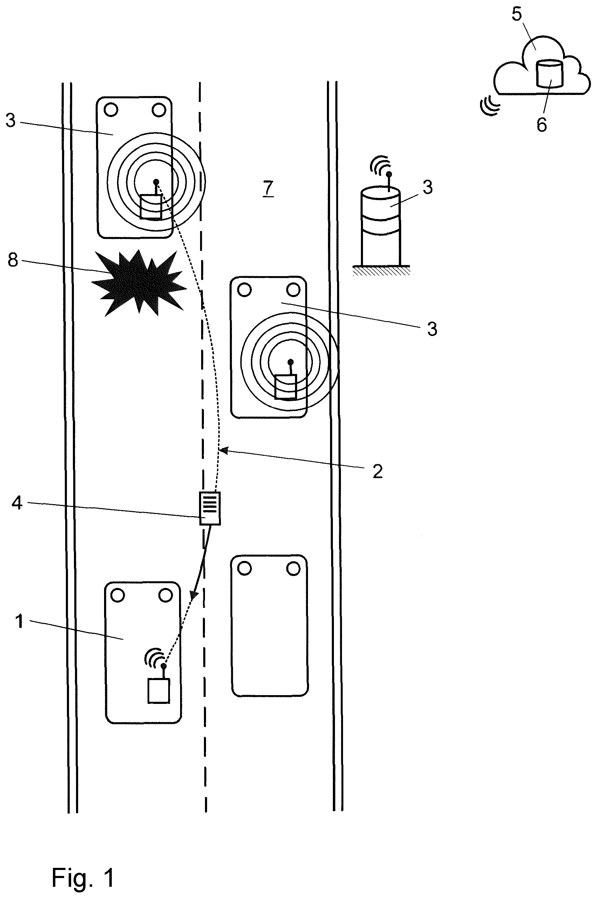

Dabei zeigt Figur 1 eine schematische Draufsicht auf eine Verkehrssituation, in der ein Fahrzeug eine Nachricht von einer Entität empfängt.

Figur 1 zeigt aus der Vogelperspektive ein auf einer Straße 7 fahrendes Fahrzeug 1, welches über eine Kommunikationsschnittstelle 2 mit mehreren Entitäten 3 in Kommunikationsverbindung steht. Bei den Entitäten 3 kann es sich beispielsweise um weitere Verkehrsteilnehmer wie Pkws oder Lkws sowie statische Infrastrukturobjekte handeln. Auch könnte es sich um ein mobiles Endgerät handeln. Die Kommunikationsschnittstelle 2 ist somit vorteilhaft als Fahrzeug-Zu-Fahrzeug Kommunikationsschnittstelle bzw. Fahrzeug-Zu-Alles oder Fahrzeug-Zu-X Kommunikationsschnittstelle ausgeführt.

Das dem Fahrzeug 1 vorausfahrende Fahrzeug ist über eine Eisfläche 8 gefahren, und hat währenddessen eine verminderte Reifenhaftung auf der Fahrbahn festgestellt. Diese Information übermittelt das vorausfahrende Fahrzeug in Form einer als Nachricht 4 verpackten Aussage weiter. Die Nachricht 4 wird vom Fahrzeug 1 über die Kommunikationsschnittstelle 2 empfangen.

Generell könnten die mittels entsprechender Nachrichten 4 übermittelten bzw. empfangenen Informationen dazu genutzt werden, das Betriebsverhalten des Fahrzeugs 1 anzupassen. Beispielsweise könnte das Fahrzeug 1 seine Fahrgeschwindigkeit reduzieren, auf die Nachbarspur wechseln, ein Fahrerassistenzsystem vorkonditionieren oder dergleichen. Um das unnötige Anpassen des Betriebsverhaltens des Fahrzeugs 1 zu vermeiden oder zu verhindern, dass das Fahrzeug 1 ein gefährliches Fahrmanöver vollführt, gilt es, die Aussage der Nachricht 4 auf Plausibilität zu überprüfen. So könnte generell das vorausfahrende Fahrzeug auch fehlerhafte oder gar falsche Aussagen machen, die vom Fahrzeug 1 zur Erhöhung der Sicherheit nicht berücksichtigt werden sollen.

Hierzu sieht ein erfindungsgemäßen Kommunikationsverfahren vor, dass das Fahrzeug 1, bevor die in der Nachricht 4 enthaltenen Informationen zum Anpassen einer Fahrzeugfunktion berücksichtigt werden, die in der Nachricht 4 enthaltene Aussagen auf Plausibilität überprüft. So kann das Fahrzeug 1 beispielsweise mit Hilfe einer Umfeldsensorik überprüfen, ob die Eisfläche 8 an der vom vorausfahrenden Fahrzeug übermittelten Stelle ebenfalls erfasst wird. Zusätzlich oder alternativ kann das Fahrzeug 1 die Existenz der Eisfläche 8 auch beim darüber hinwegfahren erkennen. Wird die Eisfläche 8, insbesondere an der richtigen Stelle, erkannt, so klassifiziert das Fahrzeug 1 die Aussage des vorausfahrenden Fahrzeugs als wahr und wenn nicht als falsch. Dementsprechend klassifiziert das Fahrzeug 1 die Entität 3 als vertrauenswürdig oder vertrauensunwürdig.

Optional kann das Fahrzeug 1 von im Umfeld befindlichen weiteren Entitäten 3 Informationen empfangen, die einen entsprechenden Datenabgleich erlauben. So könnte die Eisfläche 8 beispielsweise auch von dem auf der rechten Fahrspur fahrenden Fahrzeug und/oder der neben der Fahrbahn eingezeichneten stationären Einheit detektiert worden sein. Diese Detektionsinfo kann dann von den jeweiligen Entitäten 3 an das Fahrzeug 1 als weitere Datenquelle verschickt werden. So können generell alle in einem gewissen Umfeld anwesende Entitäten 3 ein gemeinsames Sensornetzwerk ausbilden.

Als konkrete Ausführungsform wird dabei die Vertrauenswürdigkeit durch einen Vertrauenskennwert ausgebildet. Beispielsweise kann der Vertrauenskennwert von -1 bis 1 reichen. Dabei steht "-1" für vertrauensunwürdige Entitäten 3, "0" für neutrale Entitäten 3 und "1" für vertrauenswürdige Entitäten 3. Das Fahrzeug 1 kann dann nur solche Nachrichten 4 bzw. deren Inhalt zum Anpassen eigener Fahrfunktionen berücksichtigten, die von vertrauenswürdig eingestuften Entitäten 3 empfangen wurden. Dies erhöht die Sicherheit im Straßenverkehr.

Das Fahrzeug 1 kann einzelnen Entitäten 3 zugeordnete Vertrauenskennwerte auch an eine zentrale Recheneinrichtung 5 zur zentralen Verwaltung übermitteln. Die zentrale Recheneinrichtung 5 wertet die von den Fahrzeugen 1 einer Fahrzeugflotte übermittelten Informationen aus und gleicht diese miteinander ab. Beispielsweise kann für ein und dieselbe Entität 3 ein gemittelter Vertrauenskennwert bestimmt werden und dieser in einer von der zentralen Recheneinrichtung 5 verwalteten Datenbank 6 abgelegt werden.

Jeweilige Fahrzeuge 1 können auf die Datenbank 6 zugreifen und Vertrauenskennwerte von Entitäten 3 abrufen, die zum ersten Mal eine Kommunikationsverbindung über die Kommunikationsschnittstelle 2 zum Fahrzeug 1 aufbauen.

Jeweilige Fahrzeuge 1 können Entitäten 3 auch anhand von Eigenschaften in Gruppen klassifizieren. Beispielsweise kann ein Fahrzeugtyp, ein Fahrzeugmodell, eine Motorisierung und dergleichen bestimmt werden. So kann die Zuordnung einer Entität 3 zu einer Gruppe ebenfalls vom Fahrzeug 1 an die zentrale Recheneinrichtung 5 übermittelt werden, welche aus den von der Fahrzeugflotte empfangenen Informationen eine entsprechende Gruppenzuordnung vornimmt. So können jeweilige Fahrzeuge 1 auch eine initiale Vertrauensbewertung einer erstmalig angetroffenen Entität basierend auf der Gruppenklassifikation vornehmen.

## Patentansprüche

1. Kommunikationsverfahren, wobei ein Fahrzeug (1) Informationen mittels einer Kommunikationsschnittstelle (2) mit wenigstens einer zum Fahrzeug (1) in Kommunikationsreichweite befindlichen Entität (3) austauscht, wobei die Entität (3) eine Nachricht (4), umfassend eine Aussage, an das Fahrzeug (1) übermittelt,
wobei
das Fahrzeug (1), nach Empfangen der Nachricht (4), selbstständig im Rahmen einer Vertrauensbewertung überprüft, ob die Aussage wahr oder falsch ist, und die Entität (3) als vertrauenswürdig einstuft, wenn die Aussage wahr ist oder die Entität als vertrauensunwürdig einstuft, wenn die Aussage falsch ist, wobei das Fahrzeug (1) der Entität (3) einen Vertrauenskennwert zuordnet, wobei der Vertrauenskennwert bei einer jeweiligen Vertrauensbewertung für eine vertrauensunwürdige Entität (3) reduziert und für eine vertrauenswürdige Entität (3) erhöht wird,
**dadurch gekennzeichnet, dass**
- für eine als vertrauenswürdig eingestufte Entität (3) der Vertrauenskennwert beim Detektieren einer falschen Aussage unverändert bleibt; oder
- für eine als vertrauensunwürdig eingestufte Entität (3) der Vertrauenskennwert beim Detektieren einer wahren Aussage unverändert bleibt;
- wodurch sich Ausreißer bei der Bewertung der Vertrauenswürdigkeit einer Entität (3) ignorieren lassen; wobei
nach dem Empfangen der Nachricht (4) von der Entität (3) im Rahmen des Ignorierens eines Ausreißers das Fahrzeug (1) als Reaktion eine Hinweisnachricht an die Entität (3) übermittelt; und wobei
das Fahrzeug (1), wenn das Fahrzeug (1) selbst eine Hinweisnachricht empfängt:
- aus einen zumindest teilautomatisierten Betriebsmodus in einen manuellen Betriebsmodus wechselt;
- eine Datenübertragung über die Kommunikationsschnittstelle (2) einschränkt oder einstellt;
- eine Datenübertragung über eine Telekommunikationseinheit einschränkt oder einstellt; und/oder
- eine akustische, visuelle und/oder haptische Warnnachricht an einen Fahrzeuginsassen ausgibt.

2. Kommunikationsverfahren nach Anspruch 1,
**dadurch gekennzeichnet, dass**
das Fahrzeug (1) zur Überprüfung der Aussage zu berücksichtigende Informationen:
- aus von wenigstens einem Sensor des Fahrzeugs (1) generierten Sensordaten ableitet;
- aus dem selbständig erfassten Fahrverhalten einer fahrzeugführenden Person des Fahrzeugs (1) ableitet; und/oder
- über eine mit dem Internet verbundene Telekommunikationseinheit empfängt.

3. Kommunikationsverfahren nach Anspruch 1 oder 2,
**dadurch gekennzeichnet, dass**
der Vertrauenskennwert einen Wertebereich von -1 bis 1 aufweist, wobei -1 für eine vertrauensunwürdige Entität (3), 0 für eine neutrale Entität (3) und 1 für eine vertrauenswürdige Entität (3) steht.

4. Kommunikationsverfahren nach einem der Ansprüche 1 bis 3,
**dadurch gekennzeichnet, dass**
das Fahrzeug (1) wenigstens eine Eigenschaft der Entität (3) ermittelt und Entitäten (3) in Abhängigkeit ihrer Eigenschaften in Gruppen klassifiziert.

5. Kommunikationsverfahren nach Anspruch 4,
**dadurch gekennzeichnet, dass**
für wenigstens eine Gruppe an Entitäten (3) ein Gruppenvertrauenskennwert gebildet wird, insbesondere unter bilden eines Mittelwerts der individuellen Vertrauenskennwerte der der Gruppe zugeordneten Entitäten (3).

6. Kommunikationsverfahren nach einem der Ansprüche 1 bis 5,
**dadurch gekennzeichnet, dass**
das Fahrzeug (1), sobald die Entität (3) über die Kommunikationsschnittstelle (2) eine Kommunikationsverbindung zum Fahrzeug (1) aufgebaut hat, eine Identität der Entität (3) feststellt, die Identität abspeichert, und:
- einer erstmalig mit dem Fahrzeug (1) in Kommunikation stehenden Entität (3) einen initialen neutralen Vertrauenskennwert, insbesondere mit dem Wert 0, zuordnet oder die Entität (3) einer Gruppe zuordnet und der Entität (3) einen für die Gruppe repräsentativen Gruppenvertrauenskennwert zuordnet; oder
- einer erneut mit dem Fahrzeug (1) in Kommunikation stehenden Entität (3) einen für die Entität (3) bereits angelegten Vertrauenskennwert lädt.

7. Kommunikationsverfahren nach einem der Ansprüche 1 bis 6,
**dadurch gekennzeichnet, dass**
das Fahrzeug (1) eine Vertrauensklassifikation und/oder Gruppenklassifikation wenigstens einer Entität (3) an eine zentrale Recheneinrichtung (5) übermittelt, wobei die Recheneinrichtung (5) die von einer Vielzahl an Fahrzeugen (1) empfangenen Vertrauensklassifikationen und/oder Gruppenklassifikationen entitätsspezifisch abgleicht und in einer Datenbank (6) aggregiert, insbesondere regionsspezifisch.

8. Kommunikationsverfahren nach Anspruch 7,
das Fahrzeug (1) eine Vertrauensklassifikation und/oder Gruppenklassifikation einer Entität (3) von der Recheneinrichtung (5) empfängt.

9. Kommunikationsverfahren nach einem der Ansprüche 1 bis 8,
**dadurch gekennzeichnet, dass**
der Wertebereich des Vertrauenskennwerts in zumindest ein vertrauensunwürdiges, ein neutrales und ein vertrauenswürdiges Intervall unterteilt wird und Nachrichten (4) von Entitäten (3) blockiert werden, die dem vertrauensunwürdigen Intervall zugeordnet sind, die Aussagen von Entitäten (3) die dem neutralen Intervall zugeordnet sind überprüft werden und der Informationsgehalt einer Aussage von Entitäten (3) die dem vertrauenswürdigen Intervall zugeordnet sind als Eingangsgröße für eine vom Fahrzeug (1) durchgeführte Folgereaktion berücksichtigt wird.

10. Kommunikationsverfahren nach einem der Ansprüche 1 bis 9,
**dadurch gekennzeichnet, dass**
eine Historie an Vertrauensbewertungen einer jeweiligen Entität (3) gespeichert wird, wobei zur Berechnung des aktuellen Vertrauenskennwerts aus den historischen Vertrauensbewertungen, die historischen Vertrauensbewertungen jeweils mit einem Zeitfaktor zwischen 0 und 1 multipliziert werden, wobei der Zeitfaktor den Wert 0 annimmt, wenn die jeweilige Vertrauensbewertung älter ist als ein erstes Alter und der Zeitfaktor den Wert 1 annimmt, wenn die jeweilige Vertrauensbewertung jünger ist als ein zweites Alter.

## Claims

1. Communication method wherein a vehicle (1) exchanges information by means of a communication interface (2) with at least one entity (3) located within communication range of the vehicle (1), wherein the entity (3) transmits a message (4) comprising a statement to the vehicle (1), wherein
the vehicle (1), after receiving the message (4), independently checks whether the statement is true or false as part of a trust assessment and classifies the entity (3) as trustworthy if the statement is true or classifies the entity as untrustworthy if the statement is false, wherein
the vehicle (1) assigns a trust value to the entity (3), wherein the trust value is reduced for a relevant trust assessment for an untrustworthy entity (3) and increased for a trustworthy entity (3),
**characterized in that**
- for an entity classified as trustworthy (3), the trust value remains unchanged when a false statement is detected; or
- for an entity classified as untrustworthy (3), the trust value remains unchanged when a true statement is detected;
- which allows outliers to be ignored when assessing the trustworthiness of an entity (3); wherein
after receiving the message (4) from the entity (3) in the context of ignoring an outlier, the vehicle (1) transmits a notification message to the entity (3) in response; and wherein
the vehicle (1), if the vehicle (1) itself receives an advisory message:
- changes from an at least partially automated operating mode to a manual operating mode;
- restricts or stops data transmission via the communication interface (2);
- restricts or stops data transmission via a telecommunications unit; and/or
- outputs an acoustic, visual and/or haptic warning message to a vehicle occupant.

2. Communication method according to claim 1,
**characterized in that,**
in order to check the statement, the vehicle (1):
- derives information to be taken into account from sensor data generated by at least one sensor of the vehicle (1);
- derives information to be taken into account from the independently recorded driving behavior of a person driving the vehicle (1); and/or
- receives information to be taken into account via a telecommunications unit connected to the Internet.

3. Communication method according to claim 1 or 2,
**characterized in that**
the trust value has a value range from -1 to 1, wherein -1 represents an untrustworthy entity (3), 0 represents a neutral entity (3), and 1 represents a trustworthy entity (3).

4. Communication method according to any of claims 1 to 3,
**characterized in that**
the vehicle (1) determines at least one property of the entity (3) and classifies entities (3) into groups depending on their properties.

5. Communication method according to claim 4,
**characterized in that**
a group trust value is formed for at least one group of entities (3), in particular by forming an average of the individual trust values of the entities (3) assigned to the group.

6. Communication method according to any of claims 1 to 5,
**characterized in that,**
as soon as the entity (3) has established a communication link to the vehicle (1) via the communication interface (2), the vehicle (1) determines an identity of the entity (3), stores the identity, and:
- assigns an initial neutral trust value, in particular having the value 0, to an entity (3) that is in communication with the vehicle (1) for the first time, or assigns the entity (3) to a group and assigns a group trust value representative of the group to the entity (3); or
- an entity (3) that is again in communication with the vehicle (1) loads a trust value that has already been created for the entity (3).

7. Communication method according to any of claims 1 to 6,
**characterized in that**
the vehicle (1) transmits a trust classification and/or group classification of at least one entity (3) to a central computing device (5), wherein the computing device (5) compares the trust classifications and/or group classifications received from a plurality of vehicles (1) in an entity-specific manner and aggregates them in a database (6), in particular in a region-specific manner.

8. Communication method according to claim 7,
the vehicle (1) receives a trust classification and/or group classification of an entity (3) from the computing device (5).

9. Communication method according to any of claims 1 to 8,
**characterized in that**
the value range of the trust value is divided into at least one untrustworthy, one neutral and one trustworthy interval and messages (4) from entities (3) assigned to the untrustworthy interval are blocked, the statements of entities (3) assigned to the neutral interval are checked, and the information content of a statement from entities (3) assigned to the trustworthy interval is taken into account as an input variable for a consequent response carried out by the vehicle (1).

10. Communication method according to any of claims 1 to 9,
**characterized in that**
a history of trust assessments of a relevant entity (3) is stored, wherein, in order to calculate the current trust value from the historical trust assessments, the historical trust assessments are each multiplied by a time factor between 0 and 1, wherein the time factor assumes the value 0 if the relevant trust assessment is older than a first age and the time factor assumes the value 1 if the relevant trust assessment is younger than a second age.

## Revendications

1. Procédé de communication, dans lequel un véhicule (1) échange des informations avec au moins une entité (3) se trouvant à portée de communication du véhicule (1) au moyen d'une interface de communication (2), dans lequel l'entité (3) transmet un message (4), comprenant un renseignement, au véhicule (1), dans lequel
le véhicule (1), après la réception du message (4), vérifie de manière autonome, dans le cadre d'une évaluation de confiance, si le renseignement est vrai ou faux, et classe l'entité (3) comme fiable si le renseignement est vrai ou classe l'entité comme n'étant pas fiable si le renseignement est faux, dans lequel
le véhicule (1) attribue une valeur caractéristique de confiance à l'entité (3), dans lequel, lors d'une évaluation de confiance respective, la valeur caractéristique de confiance est réduite pour une entité (3) n'étant pas fiable et augmentée pour une entité (3) fiable,
**caractérisé en ce que**
- pour une entité (3) classée comme fiable, la valeur caractéristique de confiance reste inchangée lors de la détection d'un faux renseignement ; ou
- pour une entité (3) classée comme n'étant pas fiable, la valeur caractéristique de confiance reste inchangée lors de la détection d'un renseignement vrai ;
- moyennant quoi des valeurs aberrantes lors de l'évaluation de la fiabilité d'une entité (3) peuvent être exclues ; dans lequel
après la réception du message (4) en provenance de l'entité (3), dans le cadre de l'exclusion d'une valeur aberrante, le véhicule (1) transmet en réponse un message d'indication à l'entité (3) ; et dans lequel
le véhicule (1), lorsque le véhicule (1) lui-même reçoit un message d'indication :
- passe d'un mode de fonctionnement au moins partiellement automatisé à un mode de fonctionnement manuel ;
- limite ou arrête une transmission de données par l'intermédiaire de l'interface de communication (2) ;
- limite ou arrête une transmission de données par l'intermédiaire d'une unité de télécommunication ; et/ou
- émet un message d'avertissement sonore, visuel et/ou haptique à un occupant du véhicule.

2. Procédé de communication selon la revendication 1,
**caractérisé en ce que**
le véhicule (1), pour la vérification du renseignement :
- déduit des informations à prendre en compte à partir de données de capteur générées par au moins un capteur du véhicule (1) ;
- déduit des informations à prendre en compte à partir du comportement de conduite détecté de manière autonome d'une personne conduisant le véhicule (1) ; et/ou
- reçoit des informations à prendre en compte par l'intermédiaire d'une unité de télécommunication connectée à l'Internet.

3. Procédé de communication selon la revendication 1 ou 2,
**caractérisé en ce que**
la valeur caractéristique de confiance présente une plage de valeurs allant de -1 à 1, où -1 représente une entité (3) n'étant pas fiable, 0 représente une entité (3) neutre et 1 représente une entité (3) fiable.

4. Procédé de communication selon l'une des revendications 1 à 3,
**caractérisé en ce que**
le véhicule (1) détermine au moins une propriété de l'entité (3) et classifie des entités (3) en groupes en fonction de leurs propriétés.

5. Procédé de communication selon la revendication 4,
**caractérisé en ce que**
une valeur caractéristique de confiance de groupe est formée pour au moins un groupe d'entités (3), en particulier en formant une moyenne des valeurs caractéristiques de confiance individuelles des entités (3) associées au groupe.

6. Procédé de communication selon l'une des revendications 1 à 5,
**caractérisé en ce que**
le véhicule (1), dès que l'entité (3) a établi une connexion de communication avec le véhicule (1) par l'intermédiaire de l'interface de communication (2), détermine une identité de l'entité (3), mémorise l'identité, et :
- associe à une entité (3) en communication pour la première fois avec le véhicule (1) une valeur caractéristique de confiance neutre initiale, en particulier de valeur 0, ou associe l'entité (3) à un groupe et associe à l'entité (3) une valeur caractéristique de confiance de groupe représentant le groupe ; ou
- pour une entité (3) à nouveau en communication avec le véhicule (1), charge une valeur caractéristique de confiance déjà créée pour l'entité (3).

7. Procédé de communication selon l'une des revendications 1 à 6,
**caractérisé en ce que**
le véhicule (1) transmet une classification de confiance et/ou une classification de groupe d'au moins une entité (3) à un appareil de calcul central (5), dans lequel l'appareil de calcul (5) ajuste les classifications de confiance et/ou les classifications de groupe reçues en provenance d'une pluralité de véhicules (1) de manière spécifique à l'entité et les agrège dans une base de données (6), en particulier de manière spécifique à la région.

8. Procédé de communication selon la revendication 7,
le véhicule (1) reçoit une classification de confiance et/ou une classification de groupe d'une entité (3) en provenance de l'appareil de calcul (5).

9. Procédé de communication selon l'une des revendications 1 à 8,
**caractérisé en ce que**
la plage de valeurs de la valeur caractéristique de confiance est divisée en au moins un intervalle n'étant pas fiable, un intervalle neutre et un intervalle fiable et des messages (4) d'entités (3) qui sont associées à l'intervalle n'étant pas fiable sont bloqués, les renseignements d'entités (3) qui sont associées à l'intervalle neutre sont vérifiés et le contenu d'information d'un renseignement d'entités (3) qui sont associées à l'intervalle fiable est pris en compte comme grandeur d'entrée pour une réaction consécutive exécutée par le véhicule (1).

10. Procédé de communication selon l'une des revendications 1 à 9,
**caractérisé en ce que**
un historique d'évaluations de confiance d'une entité (3) respective est mémorisé, dans lequel, pour le calcul de la valeur caractéristique de confiance actuelle à partir d'évaluations de confiance historiques, les évaluations de confiance historiques sont respectivement multipliées par un facteur temporel compris entre 0 et 1, dans lequel le facteur temporel prend la valeur 0 lorsque l'évaluation de confiance respective est plus ancienne qu'un premier âge et le facteur temporel prend la valeur 1 lorsque l'évaluation de confiance respective est plus récente qu'un second âge.
